# EUROPÄISCHE PATENTSCHRIFT

(11) **EP 2 682 511 B1**
(45) Veröffentlichungstag und Bekanntmachung des Hinweises auf die Patenterteilung: **03.10.2018**
(21) Anmeldenummer: 13174279.3
(22) Anmeldetag: 28.06.2013
(51) Int. Cl.: D06F 37/22, D06F 37/26, F16F 7/01

(54) **Maschine zum Behandeln von Wäsche**
Machine for treating laundry
Machine de traitement de linge

(30) Priorität: 06.07.2012 DE 102012211801
(43) Veröffentlichungstag der Anmeldung: 08.01.2014
(73) Patentinhaber: BSH Hausgeräte GmbH, 81739 München (DE)
(72) Erfinder: Eglmeier, Hans, 10587 Berlin (DE); Heyer-Wevers, Marcus, Dr., 10585 Berlin (DE)

(56) Entgegenhaltungen:
- JP-B2- 2 678 224
- JP-B2- 2 863 043
- US-A- 2 417 347

## Beschreibung

Die Erfindung geht aus von einer Maschine zum Behandeln von Wäsche mit einer Schwingeinheit, die eine drehbar in ihr gelagerte Wäschetrommel umfasst, wenigstens eine Ballastmasse enthält und innerhalb eines Gehäuses schwingbeweglich gelagert ist, damit Auslenkungskräfte, die beim Schleudern nasser Wäsche ausgehend von der Wäschetrommel entstehen, im Wesentlichen vom Gehäuse ferngehalten werden können, wobei wenigstens ein mit der Schwingeinheit verbundener Körper eine Struktur umfasst, die bei einer schwingenden Bewegung des Körpers eine intrinsische Energiedissipation bewirkt.

Eine solche Maschine geht hervor aus der Schrift JP 2 863 043 B2.

Zur Minderung oder weitgehenden Ausschaltung von Unwuchtbewegungen, die ein schwingendes Laugenbehälteraggregat einer Maschine zum Behandeln von Wäsche, also einer Wasch- und/oder Schleuder- und/oder Trockenmaschine oder einer Kombination aus solchen Maschinen, beim Schleudern von nasser Wäsche in allen Fällen ausüben, weil nasse Wäsche in einer Wäschetrommel immer mehr oder weniger unwuchtig verteilt ist, sind im Stand der Technik diverse Vorschläge bekannt geworden, die hier im Einzelnen nicht näher erläutert werden.

Sie betreffen passive und aktive Tilgersysteme und reichen von z. T. enormen zusätzlichen Ballastmassen am schwingenden System über z. T. raffinierte Stoßdämpfersysteme bis hin zu Massenausgleichssystemen an der rotierenden Wäschetrommel, die durch verfahrenstechnische Eingriffe in der Unwucht gegenüberstehende Positionen bugsiert werden. Von der letztgenannten Spezies sind Einrichtungen beispielsweise durch DE 877 887 B, DE 1 118 144 A, DE 2 746 989 A1, EP 640 192 B1 oder durch DE 198 42 611 C2 bekannt. Solchen Systemen sind Tilger eigen, die eine Bewegungsreduzierung durch eine von der Tilgermasse erzeugten Gegenkraft bewirken, die im Wesentlichen auf die Massenträgheit der Tilger zurückzuführen ist.

Andere aktive Tilgersysteme versuchen, die Größe und die Lage der Unwucht in der schleudernden Wäschetrommel zu ermitteln und durch raffinierte Schleuderdrehzahl-Programme eine neue Verteilung der Wäsche in der Wäschetrommel zu erreichen, bei der die Unwucht möglichst gering ist. An die verbleibende Unwucht muss schließlich die maximal erreichbare Schleuderdrehzahl noch angepasst werden.

Alle genannten Systeme leiden an einem sehr großen materiellen oder verfahrenstechnischen Aufwand. Daher ist es eine Aufgabe der Erfindung, eine billigere und mit geringerem Aufwand erreichbare Vermeidung der Auswirkungen von gefährlichen Unwuchten zu finden.

Gemäß der Erfindung wird diese Aufgabe durch die Merkmale des Anspruches 1 gelöst, wobei wenigstens ein mit der Schwingeinheit verbundener Körper eine Struktur umfasst, die bei einer schwingenden Bewegung des Körpers und/oder einer Ballastmasse eine intrinsische Energiedissipation bewirkt. Die Struktur besteht aus Kapseln, welche Hohlräume enthalten, in denen frei bewegliche Partikel enthalten sind, welche durch teilelastische Stöße und/oder durch Reibung der Partikel untereinander die Energiedissipation bewirkt, oder in denen ein Medium enthalten ist, welches aufgrund einer Bewegung des Mediums die Energiedissipation bewirkt. Beispielsweise könnte ein solches Medium auch eine Partikel enthaltende Flüssigkeit sein. Ein solches Medium könnte bei dessen Bewegung Geräusche, die bei der schnellen Drehung einer Wäschetrommel entstehen, vermindern helfen. Dabei sind unter "hohlen Kapseln" alle geschlossenen Hohlkörper beliebiger Form zu verstehen, wenn sie bei der Herstellung der Struktur im Körper oder im Teil der Ballastmasse als solche verbleiben und die in jedem Hohlkörper freie Beweglichkeit der Partikel erhalten bleibt.

Gemäß der Erfindung enthalten die Kapseln Hohlräume und sind als vorgefertigte Körper in den Werkstoff des mit der Schwingeinheit verbundenen Körpers eingeformt. Solche vorgefertigten Körper können hohle kugelähnliche Körper sein, in welchen die Partikel gefangen sind. Die Partikel sind insbesondere pulverartige Teile eines schweren Metalls, vorzugsweise von Stahl.

Gemäß vorteilhafter Ausbildungen der Erfindung kann die Struktur im Körper bzw. in einer der Ballastmasse integriert sein. Dies lässt sich bestens dadurch bewirken, dass die Kapseln in die Werkstoffmasse des Körpers bzw. Ballastgewichts eingelagert ist, z. B. durch Umgießen der Kapseln durch einen fließfähigen und nachträglich erstarrenden Werkstoff.

Die Größe der Kapseln wird am besten entsprechend einer maximal erwarteten Amplitude der insbesondere durch die Auslenkungskräfte verursachten Bewegung der Schwingeinheit bemessen. Für wenigstens nahezu kugelförmige Kapseln sollte dabei ihr größter Durchmesser bis zu 50 mm betragen. Ein bevorzugter Durchmesser könnte zwischen 1 mm und 20 mm liegen.

In heutzutage üblichen Wäschebehandlungsmaschinen umfasst die Schwingeinheit einen Laugenbehälter, der die drehbar in ihm gelagerte Wäschetrommel umschließt, wenigstens eine der Ballastmassen enthält und innerhalb eines Gehäuses schwingbeweglich gelagert ist. Ein gemäß der Erfindung im Rahmen einer Massenfertigung hergestellter Laugenbehälter oder ein Ballastkörper oder ein sonstiger starr mit dem Schwingsystem verbundener Körper kann daher ein sehr billiges System zur Verminderung von schädlichen Unwuchten beinhalten. Dabei wirken die einzelnen, innerhalb der Kapseln frei beweglichen Partikel jeweils nur geringfügig als Gegengewichte zur gerade sich auswirkenden Unwucht; in der Masse der unzähligen Partikel wirken ihre Kräfte jedoch durchaus noch erheblich. Sie vergrößern dabei die Gesamtmasse des Laugenbehälters aber nur sehr unwesentlich, weil ja ihrer zusätzlichen Anbringung die jeweils erheblich größeren Hohlräume der Kapseln gegenüberstehen. Deren zusätzliches Volumen wird aber wieder durch die Wirkung der freien Beweglichkeit der Partikel ausgeglichen.

Vor allem wirken die Partikel aber gerade nicht aufgrund ihrer Massenkräfte wie notorische Tilger. Hier wirkt insbesondere eine innere Energiedissipation, weil aufgrund der Bewegung der Partikel eine durch teilelastische Stöße gegeneinander und durch Reibung der Partikel untereinander ständig mechanische Energie "vernichtet" wird. Dieser Teil der Energie betrifft die durch Unwuchten der mit Schleuderdrehzahl rotierenden Wäschetrommel erzeugten Auslenkungskräfte, die durch die Energiedissipation gedämpft werden. Die innerhalb der Kapseln in Wärmeenergie umgewandelte mechanische Energie verringert dadurch die Kräfte, die über die Aufhängung an das Gehäuse übertragen werden oder vermeidet sie gänzlich. Zumindest wird die Bewegung des Schwingsystems erheblich reduziert.

Zusätzlich wirkt die erfindungsgemäße Maßnahme positiv auf das Geräuschdämpfungsverhalten des Laugenbehälters und der ihn umgebenden Luft, so dass auch die Geräusche beim Waschen und beim Schleudern gedämpft werden.

Wenn gemäß einer vorteilhaften Weiterbildung der Erfindung das Teil des Laugenbehälters der Mantel eines im Wesentlichen zylindrischen Hohlkörpers oder wenigstens eine Seitenwand eines im Wesentlichen zylindrischen Hohlkörpers ist, kann die neuartige dämpfende Masse in ohnehin vorhandenen Teilen des Laugenbehälters integriert sein und trägt nicht weiter auf. Diese dämpfende Masse kann aber auch zusätzlich oder ausschließlich in Anbauteilen zum Laugenbehälter verwendet werden, wenn es aus hier nicht näher definierten Gründen opportun ist.

Von besonders großem Vorteil ist eine Weiterbildung der Erfindung, bei der der Werkstoff beiderseits von je einer Haut geschützt ist, die den jeweiligen Anforderungen nach Stabilität gerecht wird. Dabei sollte die Haut der Innenseite gegenüber chemischen Einwirkungen aus Waschhilfsmitteln und/oder die Haut der Außenseite gegenüber mechanischen Einwirkungen aus Kräften stabil sein, die aus Bauteilen innerhalb der Maschine übertragen werden, mit denen die Haut der Außenseite des Laugenbehälters verbunden ist. Eine solche Haut kann beispielsweise bei einem aus Kunststoff im Spritzgussverfahren hergestellten Laugenbehälter eine insbesondere glasfaserverstärkte Hülle sein, welche die eingelagerten Kapseln in Gänze vollständig umflossen hat.

Die Merkmale aus den Unteransprüchen sowie weitere in der Beschreibung erwähnte Merkmale der Erfindung sind, soweit technisch sinnvoll, beliebig miteinander kombinierbar.

Anhand eines in der Zeichnung schematisch dargestellten Ausführungsbeispiels ist die Erfindung nachstehend näher erläutert. Es zeigen
- Fig. 1: eine von der Front her gerichtete Durchsicht durch eine erfindungsgemäß ausgestattete Waschmaschine mit einer Schwingeinheit,
- Fig. 2: die Detailansicht eines Schnittes durch den Laugenbehälter der Schwingeinheit entlang einer Schnittlinie II-II in Fig. 1 und
- Fig. 3: eine kugelförmige Kapsel mit eingeschlossenen Partikeln vor dem Umspritzen mit dem Kunststoff-Werkstoff des Laugenbehälters.

Die Waschmaschine 1 hat ein schrankförmiges Gehäuse 2, in das ein schwingendes Laugenbehältersystem 3, bestehend aus einem Laugenbehälter 4, einer darin drehbar gelagerten Wäschetrommel 5 und einem Antriebsmotor 6 mit Riementrieb 7, eingehängt ist. Es hängt an Federn 8 und ist über Stoßdämpfer 9 am Boden 10 des Gehäuses 2 abgestützt. Diese Stoßdämpfer 9 übertragen die Kräfte aus dem Schwingsystem 3 an das Gehäuse 2. Aufgrund der Erfindung könnten die Stoßdämpfer 9 als Stützelement gänzlich entfallen oder müssten doch wenigstens nur noch eine geringere Dämpfwirkung als üblich haben, um die Schwingbewegungen auch während des Resonanzdurchgangs der schleudernden Wäschetrommel 5 noch sicher zu beherrschen.

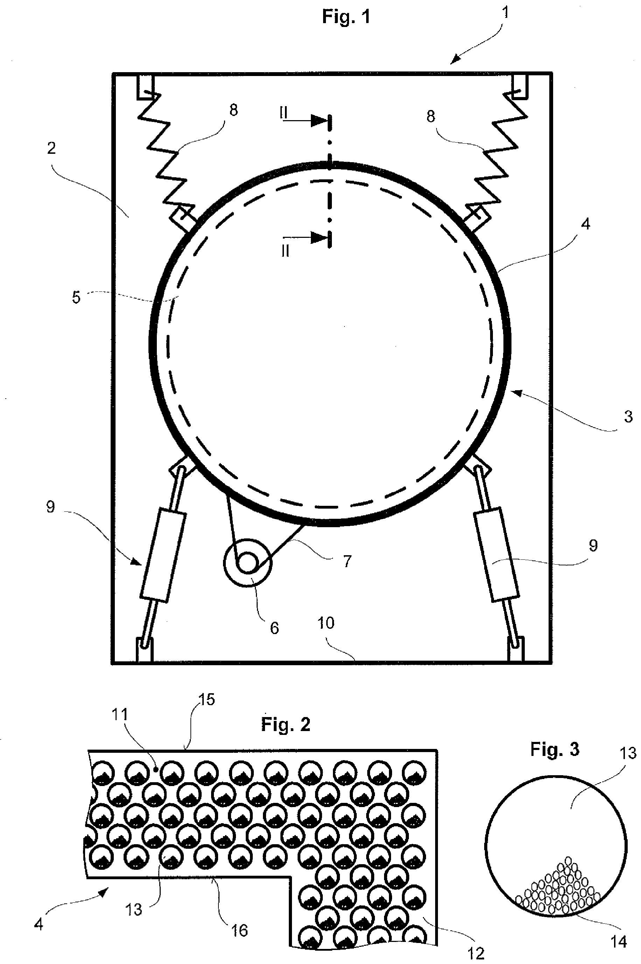

Der Mantel 11 und - im vorliegenden Beispiel - auch mindestens ein Boden 12 des Laugenbehälters 4 sind gemeinsam aus einem Kunststoff gespritzt (Fig. 2), in den Kapseln 13 eingelagert sind, die kleinste Partikel 14 (Fig. 3) aus einem schweren Werkstoff, vorzugsweise aus Stahl oder Eisen, so in sich einschließen, dass die Partikel 14 innerhalb der Kapseln 13 noch frei beweglich sind. Die bevorzugte Kapselgröße entspricht einer zu erwartenden Schwingamplitude des Schwingsystems. Der Durchmesser von kugelförmigen Kapseln 13 kann geringer sein als 50 mm und vorzugsweise zwischen 1 und 20 mm liegen. Die Bemessung der Kapseln ist insbesondere für den Bereich der hohen Drehzahlen relevant (oberhalb der Resonanzdrehzahl), da dort die Kräfte aus einer verbliebenen Unwucht am ehesten schädliche Einflüsse auf Geräusche und Bauteile der Waschmaschine haben. Die eingelagerten Kapseln müssen übrigens nicht unbedingt gleichmäßig im Werkstoff verteilt sei. Wenn es eine der Aufgaben ist, vor allem in einem bestimmten Bereich der Schwingeinheit auftretende Auslenkungskräfte zu verringern, kann es sinnvoll sein, die eingelagerten Kapseln in Teilen des Werkstoffe zu verdichten, in anderen Teilen aber weiter zu streuen.

Die Außenseite und die Innenseite der Wandung des Laugenbehälters 4 ist vorzugsweise durch eine Haut 15 (außen) und 16 (innen) zu schützen. Die Innenhaut 16 muss vor allem chemischen Angriffen aus den benutzten Waschhilfsmitteln standhalten und die Außenhaut 15 vornehmlich mechanischen Kräften, die vor allem von außen mit dem Laugenbehälter verbunden Bauteilen herrühren können. Solche Bauteile können beispielsweise der Antriebsmotor 6, Anlenkungsteile der Federn 8 und der Stoßdämpfer 9 sowie weitere hier nicht näher bezeichnete Bauteile sein.

Die Häute 15 und 16 können im Spritzgussverfahren bereits durch den verwendeten Kunststoff, in den die Kapseln 13 eingebettet sind, gebildet werden oder durch einen zusätzlich in die Spritzgussform eingebrachten, speziell formatierten Werkstoff.

Im Falle einer Schwingung des schwingenden Systems 3, vermutlich beim Schleudern durch einen unwuchtig verteilten Wäscheposten in der Wäschetrommel 5 verursacht, werden die Partikel 14 innerhalb der Kapseln 13 als amorphe Ballastmasse in Schwingungsrichtung beschleunigt, prallen aber gegen die gegenüber liegende Innenwand der Kapseln 13, sobald sich die Schwingungsrichtung umkehrt. Beim Aufschlagen der Partikel 14 auf diese jeweils gegenüber liegende Innenwand bremsen sie aber die Gegenschwingung und werden fortan beim Umkehren der Schwingungsrichtung wieder gegen die neue gegenüber liegende Wand prallen und sich der Schwingung entgegenwerfen. Außerdem reiben sich die Partikel gegeneinander und vernichten auch dadurch mechanische Energie.

Diese Abfolgen sorgen dafür, dass die Unwuchtschwingungen des schwingenden Systems 3 gedämpft werden. Im Stand der Technik sorgen feste Zusatzmassen, die gesondert am Laugenbehälter angebracht sind oder Teile des Laugenbehälters bilden, für eine ähnliche Dämpfung. Da diese Zusatzmassen jedoch fest sind und keinerlei innere Dissipation aufweisen, ist für sie erheblich mehr Masse nötig, um solche Schwingungen adäquat dämpfen zu können als beim Einsatz der erfindungsgemäßen Mittel. An Orten innerhalb der Waschmaschine, die vom schwingenden Laugenbehältersystem 3 nicht erreicht werden, können weitere Teile des Laugenbehälters 4 oder Anbauteile für den Laugenbehälter 4 vorgesehen sein, die ebenfalls mit Kapseln 13 der vorbeschriebenen Art versehen sind oder aus festen schweren Massen bestehen.

Ein intrinsisch dämpfender Laugenbehälterwerkstoff kann mindestens einen erheblichen Anteil an der Dämpfung von unwuchtbedingten Schwingungen des schwingenden Systems 3 haben. Weiterhin erforderliche Bauteile von Unwuchtkontrollsystemen können dadurch viel kleiner ausgelegt sein und/oder die Restunwucht erheblich effektiver bekämpfen. Der hohe Anteil der durch die erfindungsgemäßen Maßnahmen im Laugenbehälter 4 konzentrierten Dissipationsmassen (Kapseln 13 mit Partikeln 14) führt zumindest zu einer erheblichen Verkleinerung der sonst noch zusätzlich nötigen Ballastmassen und zu einer effektiveren Ausnutzung des innerhalb des Maschinengehäuses 2 vorhandenen Schwingraumes. Die geringere Bewegung des Laugenbehälters 4 erlaubt mehr Bauraum für eine größere Wäschetrommel 5 und für eine höhere Ladekapazität der Wäschetrommel 5. Die zusätzlich gewonnene Geräuschdämpfung durch den neuartigen Laugenbehälterwerkstoff vermindert zusätzlich noch die Geräusche beim Waschen und beim Schleudern.

Das erfindungsgemäße System zur Dämpfung der Schwingneigung von Wäschebehandlungsmaschinen kann auch bei Waschmaschinen angewendet werden, deren Laugenbehälter nicht zur Schwingeinheit gehört. Dort steht der Laugenbehälter zusammen mit dem umgebenden Gehäuse fest, und nur die Wäschetrommel zusammen mit ihrer Lagerung und dem Antriebssystem können sich schwingend bewegen. Dort sind die Körper oder Ballastmassen mit der erfindungsgemäßen Struktur auszustatten, die fest mit dem schwingenden System der Wäschetrommel verbunden sind. Auch könnten Teile der Wäschetrommel selbst oder Teile der Schwingeinheit im Werkstoff integrierte Strukturen gemäß der Erfindung enthalten. Dabei wird nochmals ausdrücklich darauf hingewiesen, dass eine erfindungsgemäß ausgestattete Schwingeinheit - egal, ob der Laugenbehälter mitschwingt oder nicht - nicht mehr unbedingt mit Ballastmassen im Sinne von Tilgern des Standes der Technik versehen sein müssen, wenn für erfindungsgemäße Strukturen genügend Anbringungsorte vorhanden sind.

## Patentansprüche

1. Maschine zum Behandeln von Wäsche mit einer Schwingeinheit (3), die eine drehbar in ihr gelagerte Wäschetrommel (5) umfasst, wenigstens eine Ballastmasse (13, 14) enthält und innerhalb eines Gehäuses (2) schwingbeweglich gelagert ist, damit Auslenkungskräfte, die beim Schleudern nasser Wäsche ausgehend von der Wäschetrommel (5) entstehen, im Wesentlichen vom Gehäuse (2) ferngehalten werden können, wobei wenigstens ein mit der Schwingeinheit (3) verbundener Körper (4, 11, 12) eine Struktur (13, 14) umfasst, die bei einer schwingenden Bewegung des Körpers (4, 11, 12) eine intrinsische Energiedissipation bewirkt, **dadurch gekennzeichnet, dass** die Struktur (13, 14) aus Kapseln (13) besteht, welche Hohlräume enthalten, in denen frei bewegliche Partikel (14) enthalten sind, welche durch teilelastische Stöße und/oder durch Reibung der Partikel untereinander die Energiedissipation bewirkt, oder ein Medium enthalten ist, welches aufgrund seiner Bewegung durch innere Strukturreibung die Energiedissipation bewirkt, und dass die Kapseln (13) als vorgefertigte Körper in den Werkstoff des mit der Schwingeinheit (3) verbundenen Körpers (4, 11, 12) eingeformt sind.

2. Maschine nach Anspruch 1, **dadurch gekennzeichnet, dass** der der Körper (4, 11, 12) mit der Schwingeinheit (3) starr verbunden ist.

3. Maschine nach einem der Ansprüche 1 und 2, **dadurch gekennzeichnet, dass** der mit der Schwingeinheit (3) verbundene Körper (4, 11, 12) ein Laugenbehälter (4), der die drehbar in ihm gelagerte Wäschetrommel (5) umschließt, und/oder wenigstens eine Ballastmasse (13, 14) ist.

4. Maschine nach einem der vorstehenden Ansprüche, **dadurch gekennzeichnet, dass** die Struktur (13, 14) im mit der Schwingeinheit (3) verbundenen Körper (4) integriert ist.

5. Maschine nach einem der vorstehenden Ansprüche, **dadurch gekennzeichnet, dass** die Kapseln (13) hohle kugelähnliche Körper sind.

6. Maschine nach einem der vorstehenden Ansprüche, **dadurch gekennzeichnet, dass** die Größe der Kapseln (13) entsprechend einer maximal erwarteten Amplitude der insbesondere durch die Auslenkungskräfte verursachten Bewegung der Schwingeinheit (3) bemessen ist.

7. Maschine nach Anspruch 6, **dadurch gekennzeichnet, dass** die Kapseln (13) wenigstens nahezu kugelförmig sind und ihr größter Durchmesser bis zu 50 mm, bevorzugt zwischen 1 mm und 20 mm, beträgt.

8. Maschine nach einem der vorstehenden Ansprüche, **dadurch gekennzeichnet, dass** die Partikel (14) pulverartige Teile eines Werkstoffs mit einer Dichte größer 1.000 kg/m³, bevorzugt 2.000 bis 10.000 kg/m³, insbesondere der Dichte von Beton mit ca. 2.400 kg/m³ oder von Eisen mit 8.000 kg/m³ sind, vorzugsweise von Stahl.

9. Maschine nach einem der vorstehenden Ansprüche, **dadurch gekennzeichnet, dass** die Partikel (14) in einem flüssigen Medium enthalten sind, das in der Kapsel (13) enthalten ist.

10. Maschine nach einem der Ansprüche 3 bis 9, **dadurch gekennzeichnet, dass** der mit der Schwingeinheit (3) verbundene Körper ein Mantel (11) eines im Wesentlichen zylindrischen Hohlkörpers und des Laugenbehälters (4) ist.

11. Maschine nach einem der Ansprüche 3 bis 9, **dadurch gekennzeichnet, dass** der mit der Schwingeinheit (3) verbundene Körper wenigstens eine Seitenwand (12) eines im Wesentlichen zylindrischen Hohlkörpers und des Laugenbehälters (4) ist.

12. Maschine nach einem der vorstehenden Ansprüche, **dadurch gekennzeichnet, dass** der die Struktur (13, 14) umgebende Werkstoff beiderseits des mit der Schwingeinheit (3) verbundenen Körpers (4, 11, 12) von je einer Haut (15, 16) geschützt ist, und die Haut (16) der Innenseite gegenüber chemischen Einwirkungen aus Waschhilfsmitteln stabil ist.

13. Maschine nach einem der vorstehenden Ansprüche, **dadurch gekennzeichnet, dass** der die Struktur (13, 14) umgebende Werkstoff beiderseits des mit der Schwingeinheit (3) verbundenen Körpers (4, 11, 12) von je einer Haut (15, 16) geschützt ist, und die Haut (15) der Außenseite gegenüber mechanischen Einwirkungen aus Kräften stabil ist, die aus Bauteilen innerhalb der Maschine übertragen werden, mit denen die Haut (15) der Außenseite des mit der Schwingeinheit (3) verbundenen Körpers (4, 11, 12) verbunden ist.

## Claims

1. Machine for treating laundry, having an oscillation unit (3) that comprises a laundry drum (5) rotatably mounted therein, contains at least one ballast mass (12, 13) and is mounted so as to move in an oscillatory manner within a housing (2), so that deflection forces that arise from the laundry drum (5) when spinning wet laundry can substantially be kept away from the housing (2), wherein at least one body (4, 11, 12) connected to the oscillation unit (3) comprises a structure (13, 14) which produces an intrinsic energy dissipation during an oscillating motion of the body (4, 11, 12), **characterised in that** the structure (13, 14) consists of capsules (13) which contain cavities in which freely moving particles (14) are contained, the energy dissipation being produced by partially elastic impacts and/or by friction of the particles with one another, or a medium is contained which because of its motion produces the energy dissipation by internal structure friction, and that the capsules (13) are moulded as prefabricated bodies in the material of the body (4, 11, 12) connected to the oscillation unit (3).

2. Machine according to claim 1, **characterised in that** the body (4, 11, 12) is rigidly connected to the oscillation unit (3).

3. Machine according to claim 1 or 2, **characterised in that** the body (4, 11, 12) connected to the oscillation unit (3) is a tub (4) which encloses the laundry drum (5) rotatably mounted therein, and/or is at least a ballast mass (13, 14).

4. Machine according to one of the preceding claims, **characterised in that** the structure (13, 14) is integrated into the body (4) connected to the oscillation unit (3).

5. Machine according to one of the preceding claims, **characterised in that** the capsules (13) are hollow spheroidal bodies.

6. Machine according to one of the preceding claims, **characterised in that** the size of the capsules (13) is measured in accordance with a maximum expected amplitude of the motion of the oscillation unit (3) caused in particular by the deflection forces.

7. Machine according to claim 6, **characterised in that** the capsules (13) are at least virtually spherical and their largest diameter is up to 50 mm, preferably between 1 mm and 20 mm.

8. Machine according to one of the preceding claims, **characterised in that** the particles (14) are powder-like parts of a material with a density greater than 1,000 kg/m³, preferably 2,000 to 10,000 kg/m³, in particular the density of concrete with about 2,400 kg/m³ or of iron with 8,000 kg/m³, preferably of steel.

9. Machine according to one of the preceding claims, **characterised in that** the particles (14) are contained in a liquid medium which is contained in the capsule (13).

10. Machine according to one of claims 3 to 9, **characterised in that** the body connected to the oscillation unit (3) is a casing (11) of a substantially cylindrical hollow body and of the tub (4).

11. Machine according to one of claims 3 to 9, **characterised in that** the body connected to the oscillation unit (3) is at least one side wall (12) of a substantially cylindrical hollow body and of the tub (4).

12. Machine according to one of the preceding claims, **characterised in that** the material surrounding the structure (13, 14) on both sides of the body (4, 11, 12) connected to the oscillation unit (3) is protected in each case by a skin (15, 16), and the skin (16) of the inside is resistant to chemical influences from washing additives.

13. Machine according to one of the preceding claims, **characterised in that** the material surrounding the structure (13, 14) is protected on both sides of the body (4, 11, 12) connected to the oscillation unit (3) by a skin (15, 16) in each case, and the skin (15) of the outside is resistant to mechanical influences from forces that are transmitted from components inside the machine to which the skin (15) of the outside of the body (4, 11, 12) connected to the oscillation unit (3) is connected.

## Revendications

1. Machine de traitement du linge avec une unité oscillante (3), qui englobe un tambour à linge (5) logé en rotation en son sein, contient au moins une masse de lestage (13, 14) et est logée en liberté d'oscillation à l'intérieur d'une carcasse (2), afin de pouvoir maintenir les forces d'oscillation générées au départ du tambour à linge (5) lors de l'essorage de linge mouillé essentiellement à l'écart de la carcasse (2), dans laquelle au moins un corps (4, 11, 12) relié à l'unité oscillante (3) englobe une structure (13, 14) qui induit une dissipation d'énergie intrinsèque lors d'un mouvement oscillant du corps (4, 11, 12), **caractérisée en ce que** la structure (13, 14) se compose de capsules (13) contenant des cavités, dans lesquelles sont contenues des particules (14) librement mobiles, lesquelles induisent la dissipation énergétique par des chocs partiellement élastiques et/ou par frottement des particules l'une contre l'autre, ou contenant une substance induisant la dissipation énergétique par frottement de structure interne en raison de son mouvement, et **en ce que** les capsules (13) sont constituées sous la forme de corps préfabriqués dans le matériau du corps (4, 11, 12) relié à l'unité oscillante (3).

2. Machine selon la revendication 1, **caractérisée en ce que** le corps (4, 11, 12) est relié de façon rigide à l'unité oscillante (3).

3. Machine selon l'une des revendications 1 et 2, **caractérisée en ce que** le corps (4, 11, 12) relié à l'unité oscillante (3) est une cuve de lavage (4) qui englobe le tambour à linge (5) logé en rotation en son sein et/ou est au moins une masse de lestage (13, 14).

4. Machine selon l'une des revendications précédentes, **caractérisée en ce que** la structure (13, 14) est intégrée au corps (4) relié à l'unité oscillante (3).

5. Machine selon l'une des revendications précédentes, **caractérisée en ce que** les capsules (13) sont des corps creux sphéroïdaux.

6. Machine selon l'une des revendications précédentes, **caractérisée en ce que** la taille des capsules (13) est calculée selon une amplitude maximale attendue du mouvement de l'unité oscillante (3) causé en particulier par les forces de déviation.

7. Machine selon la revendication 6, **caractérisée en ce que** les capsules (13) sont au moins pratiquement sphériques et leur plus grand diamètre atteint jusqu'à 50 mm, de préférence entre 1 mm et 20 mm.

8. Machine selon l'une des revendications précédentes, **caractérisée en ce que** les particules (14) sont des parties pulvérulentes d'un matériau présentant une densité supérieure à 1 000 kg/m³, de préférence de 2 000 à 10 000 kg/m³, en particulier la densité du béton d'environ 2 400 kg/m³ ou du fer à 8 000 kg/m³, de préférence de l'acier.

9. Machine selon l'une des revendications précédentes, **caractérisée en ce que** les particules (14) sont contenues dans une substance fluide contenue dans les capsules (13).

10. Machine selon l'une des revendications 3 à 9, **caractérisée en ce que** le corps relié à l'unité oscillante (3) est un manteau (11) d'un corps creux essentiellement cylindrique et de la cuve de lavage (4).

11. Machine selon l'une des revendications 3 à 9, **caractérisée en ce que** le corps relié à l'unité oscillante (3) est au moins une paroi latérale (12) d'un corps creux essentiellement cylindrique et de la cuve de lavage (4).

12. Machine selon l'une des revendications précédentes, **caractérisée en ce que** le matériau entourant la structure (13, 14) est protégé par une peau (15, 16) de chaque côté du corps (4, 11, 12) relié à l'unité oscillante (3) et la peau (16) du côté intérieur est stable face aux influences chimiques exercées par les adjuvants de lavage.

13. Machine selon l'une des revendications précédentes, **caractérisée en ce que** le matériau entourant la structure (13, 14) est protégé par une peau (15, 16) de chaque côté du corps (4, 11, 12) relié à l'unité oscillante (3) et la peau (15) du côté extérieur est stable face aux influences mécaniques exercées par les forces transmises par les composants à l'intérieur de la machine, avec lesquels la peau (15) du côté extérieur du corps (4, 11, 12) relié à l'unité oscillante (3) est reliée.
